# EUROPEAN PATENT SPECIFICATION

(11) **EP 1 609 971 B1**
(45) Date of publication and mention of the grant of the patent: **22.10.2008**
(21) Application number: 04721348.3
(22) Date of filing: 17.03.2004
(51) Int. Cl.: F02M 35/10, F02D 9/08, G01L 23/24, F02D 35/00, F02M 69/48, F02D 41/32, F02D 9/02, F02D 9/10

(54) **THROTTLE BODY**
DROSSELKÖRPER
CORPS DE BOITIER PAPILLON

(30) Priority: 20.03.2003 JP 2003078539
(43) Date of publication of application: 28.12.2005
(73) Proprietor: Keihin Corporation, Tokyo 163-0539 (JP)
(72) Inventor: NOMURA, Kenichi, c/o Keihin Corporation, Kawasaki-shi, Kanagawa 211-8580 (JP); CHIDA, Satoshi, Keihin Corp. Tochigi Res. & Dev., Takanezawa-m, Shioya-g, Tochigi 329-1233 (JP)
(74) Representative: Fritsche, Rainer
(86) International application number: PCT/JP2004/003573
(87) International publication number: WO 2004/083618

(56) References cited:
- JP-A- 6 146 947
- JP-A- 8 261 080
- JP-A- 9 242 576
- JP-A- 2003 278 578
- JP-U- 61 033 959

## Description

### TECHNICAL FIELD

The present invention relates to a throttle body that has an intake passage on which is located a throttle valve. In particular, the present invention relates to a throttle body that is equipped with an intake pressure sensor that detects the pressure inside an intake passage.

### BACKGROUND ART OF THE INVENTION

The following apparatus exists as technology relating to a throttle body that has an intake passage that is provided with a throttle valve and is also provided with an intake pressure sensor that detects the pressure inside the intake passage via a pressure inlet passage hole that has an aperture portion on a downstream side of the throttle valve of the intake passage. Namely, in this apparatus, a circular arc-shaped groove that has a larger diameter than that of the intake passage is formed on a downstream side end surface of the intake passage of the throttle body, and a rectilinear groove that intersects with the direction in which the intake passage extends and opens inside the intake passage is formed at an end portion of the circular arc-shaped groove, and a pressure inlet passage hole is formed by the circular arc-shaped groove and the rectilinear groove (for example, refer to Japanese Unexamined Patent Application, First Publication No. H08-261080).

In the above described technology, an air flow is generated in the pressure inlet passage hole, and oil mist and the like that also gets in is returned to the intake passage side. However, in the above described technology, it is easy for oil mist and the like to enter into the pressure inlet passage. Moreover, there is a possibility that the oil mist that has got inside will not be discharged due to its viscosity and will end up blocking the pressure inlet passage hole. If the pressure inlet passage hole becomes blocked in this manner, then it is evident that accurate detections by the intake pressure sensor will not be possible.

### DISCLOSURE OF INVENTION

Accordingly, it is an object of the present invention to provide a throttle body that can prevent the ingress of oil mist and the like into a pressure inlet passage hole, and that can make accurate detections consistently using an intake pressure sensor.

In order to achieve the above objects, the present invention provides a throttle body includes an intake passage on which is provided a throttle valve; a pressure inlet passage hole which has an aperture portion on a downstream side of the throttle valve on the intake passage, and a sensor mounting portion on which is mounted an intake pressure sensor which detects pressure inside the intake passage via the pressure inlet passage hole, wherein the pressure inlet passage hole is formed in an oblique direction relative to the direction in which the intake passage extends so as to move away from the intake passage as it approaches the upstream side of the extension direction of the intake passage.

In the throttle body having the above described structure, the pressure inlet passage hole is formed extending from an aperture portion in an oblique direction relative to the direction in which an intake passage extends so as to move away from the intake passage as it approaches the upstream side of the extension direction of the intake passage. Because of this, the pressure inlet passage hole is aligned at an acute angle relative to oil mist and the like that is made to flow by an airflow generated in the intake passage, and extends on the opposite side in the return direction thereof. As a result, it is difficult for oil mist and the like to enter into the pressure inlet passage hole. Moreover, the depth of the aperture portion side of the pressure inlet passage hole from the intake passage becomes shallower approaching the downstream side of the intake flow. Accordingly, for this reason as well, it is difficult for oil mist and the like to enter.

In the throttle body of the present invention, it is preferable that the aperture portion have an elliptical shape which is elongated in the direction in which the intake passage extends.

In this manner, since the aperture portion has an elliptical shape which is elongated in the direction in which the intake passage extends, then even if oil mist or the like does become adhered to the aperture portion, it is difficult for the aperture portion to become blocked. Also, since a hole having a circular cross section is formed and extending in an oblique direction, as is described above, as the pressure inlet passage hole, then this alone causes the aperture portion of this pressure inlet passage hole to be formed in a substantially elliptical shape that is elongated in the direction in which the intake passage extends.

In the throttle body of the present invention, it is preferable that an opposite side from the aperture portion side of the pressure inlet passage hole be connected to a connecting passage hole which extends perpendicularly relative to the pressure inlet passage hole, and for the pressure inlet passage hole be connected to the intake pressure sensor via the connecting passage hole.

In this manner, since the opposite side of the pressure inlet passage hole from the intake passage side is connected to the connecting passage hole that extends perpendicularly relative to the pressure inlet passage hole, it is difficult for oil mist and the like to reach the intake pressure sensor.

In the throttle body of the present invention, it is preferable that the aperture portion be provided adjacent to a center of rotation side of the throttle valve.

In this manner, since the aperture portion is provided adjacent to the center of rotation side of the throttle valve, it is difficult for the aperture portion to be affected by the flow rate that is generated when the throttle valve is opened.

In the throttle body of the present invention, it is also preferable that the throttle body include a housing portion which is formed at a top portion of the throttle body, and for the sensor mounting portion to be provided with a placement portion that is formed on a bottom surface of the housing portion as a result of a circumference thereof being surrounded by wall portions, and with an insertion passage hole which is opened in the placement portion.

### BRIEF DESCRIPTION OF THE DRAWINGS

FIG. 1 is a perspective view as seen from one direction showing a throttle body assembly and the like that includes an embodiment of the present invention.
FIG. 2 is a perspective view as seen from another direction showing a throttle body assembly and the like that includes the embodiment of the present invention.
FIG. 3 is an exploded perspective view showing the embodiment of the present invention.
FIG. 4 is a cross-sectional view showing the embodiment of the present invention.
FIG. 5 is a plan view showing the embodiment of the present invention.
FIG. 6 is a side surface view showing a cross section of a portion of a throttle body main body that is used in the embodiment of the present invention.
FIG. 7 is a planar cross-sectional view of a throttle body main body that is used in the embodiment of the present invention.

### BEST MODE FOR CARRYING OUT THE INVENTION

An embodiment of the throttle body of the present invention will now be described with reference being made to the attached drawings.

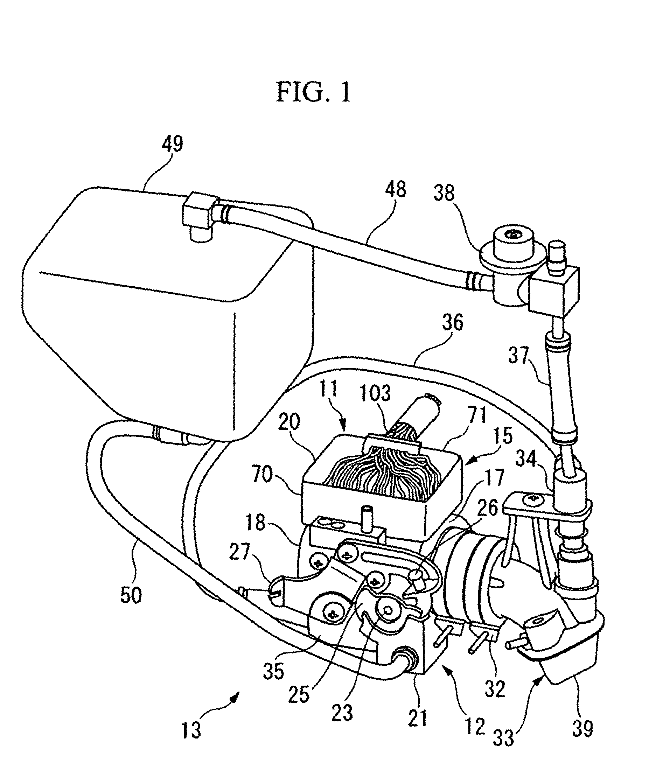

A description will now be given with reference made to FIGS. 1 to 5 of a throttle body assembly 13 that has been modularized by integrally incorporating an engine control unit (i.e., an electronic control unit) 11 in a throttle body 12 of the present embodiment.

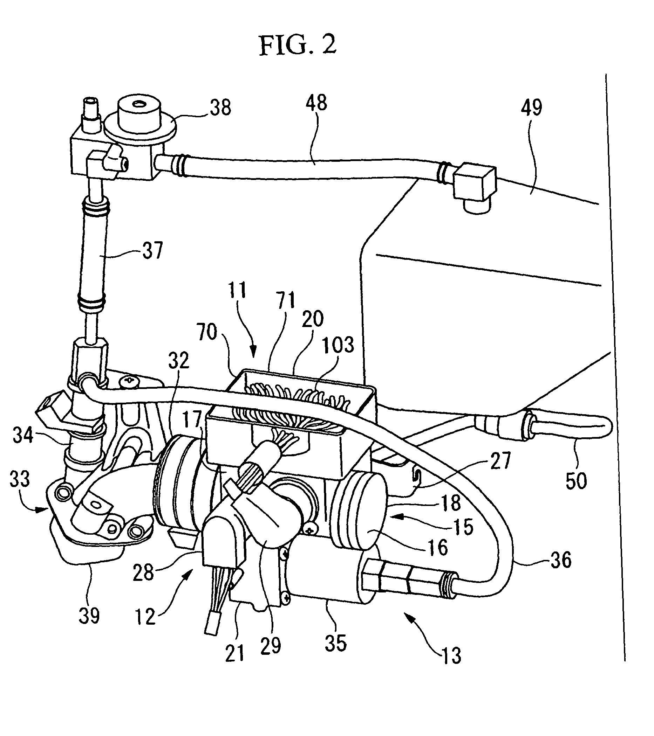

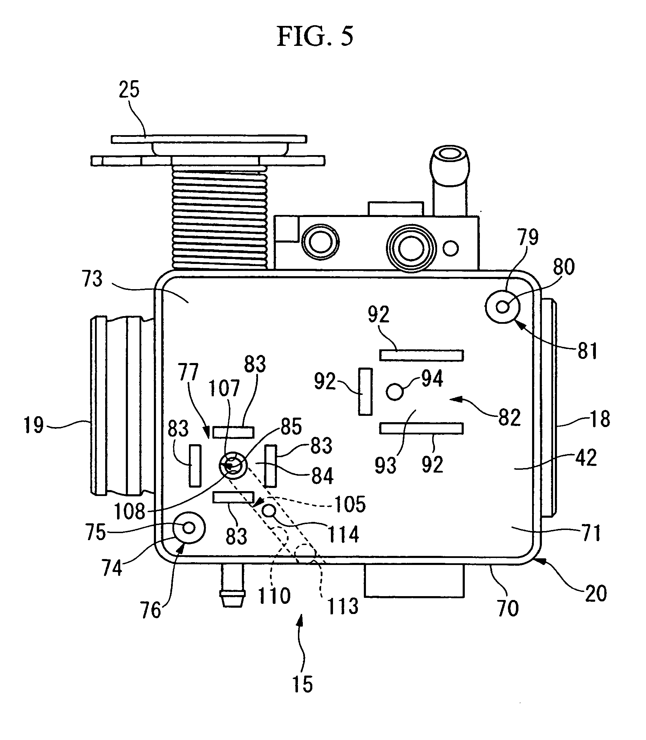

The throttle body assembly 13 shown in FIGS. 1 and 2 is mounted, for example, on a motorcycle and has a throttle body main body 15. As shown in FIG 5, the throttle body main body 15 is an integrally molded component that is formed from a metal such as aluminum. The throttle body main body 15 has an intake passage formation portion 17, an entrance side duct portion 18, an exit side duct portion 1, a housing portion 20 for housing electrical components, and a fuel pump mounting portion 21. The intake passage formation portion 17is formed substantially as a stepped cylinder whose internal cross section orthogonal to the axis is circular, and in which an intake passage 16 is formed extending in one direction. The entrance side duct portion 18 is shaped as a circular cylinder and is formed at one end side of the direction in which the intake passage 16 of the intake passage formation portion 17 extends. The exit side duct portion 19 is shaped as a circular cylinder and is formed at the other end side of the intake passage formation portion 17. The housing portion 20 is formed outside the throttle body 12 and above the intake passage formation portion 17 and whose side that is opposite from the intake passage formation portion 17 is open. The fuel pump mounting portion 21 is provided below the intake passage formation portion 17.

In addition, a throttle valve 24 is provided in the throttle body assembly 13. The throttle valve 24 can open and close the intake passage 16 by rotating around a rotation shaft 23 inside the intake passage 16 of the throttle body main body 15. The throttle valve 24 is linked to a side portion of the throttle body main body 15 so that, as shown in FIG. 1, it is coaxial with the rotation shaft 23. The throttle valve 24 is provided with a rotating member 25 that is rotated by a throttle wire (not shown), and with a stopper member 27 that supports this throttle wire and adjusts a rotation limit position of the rotating member 25 using an adjustment screw 26.

Furthermore, as shown in FIG. 2, a throttle position sensor 28 is provided in the throttle body assembly 13 on the opposite side from the rotating member 25 of the throttle body main body 15. The throttle position sensor 28 detects a position of the throttle valve 24 by detecting the rotation angle of the rotation shaft 23. Moreover, a secondary air supply apparatus 29 is provided in parallel with the throttle position sensor 28.

The throttle body 12 is mainly constituted by the throttle body main body 15, the throttle valve 24, the rotating member 25, the stopper member 27, the throttle position sensor 28, and the secondary air supply apparatus 29.

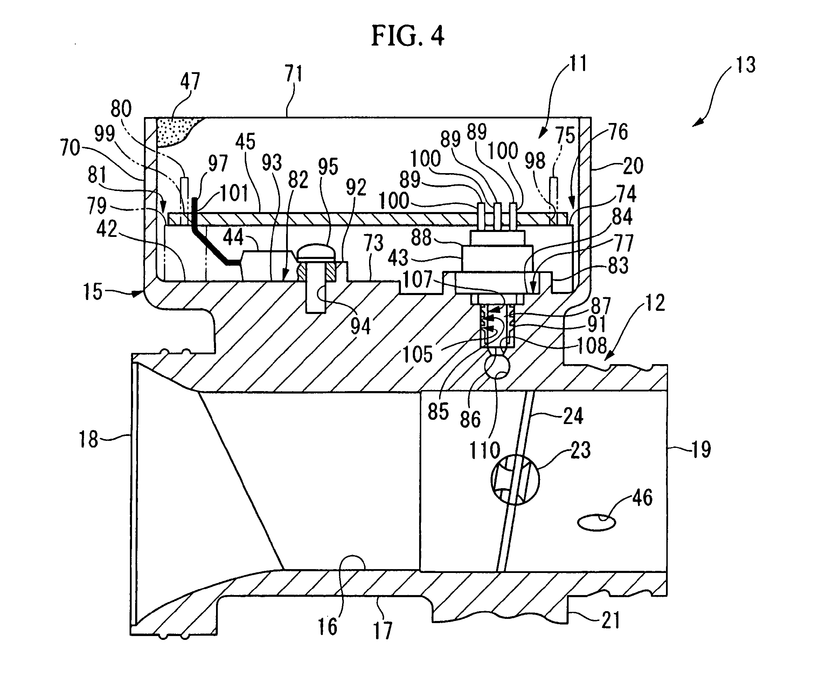

The throttle body assembly 13 has a connecting tube 32 (see FIGS. 1 and 2), an intake manifold 33, an injector 34, a fuel pump 35, a tube 36, a tube 37, and a relief valve 38. The connecting tube 32 is connected to the exit side duct portion 19 shown in FIG. 4 of the intake passage formation portion 17 of the throttle body main body 15. The intake manifold 33 is connected to the exit side duct portion 19 of the intake passage formation portion 17 by the connecting tube 32 and that has an intake passage (not shown) that is connected to the intake passage 16 of the intake passage formation portion 17 formed in the interior thereof. The injector 34 is attached to the intake manifold 33 and injects fuel into the intake passage. The fuel pump 35 is mounted on the fuel pump mounting portion 21 of the throttle body main body 15 and supplies fuel to the injector 34. The tube 36 connects the injector 34 to the fuel pump 35. The tube 37 is connected to the injector 34. The relief valve 38 is connected to the tube 37. Note the intake manifold 33 is bent partway along the length thereof such that an engine mounting portion 39 that is on the opposite side from the throttle body 12 faces downwards.

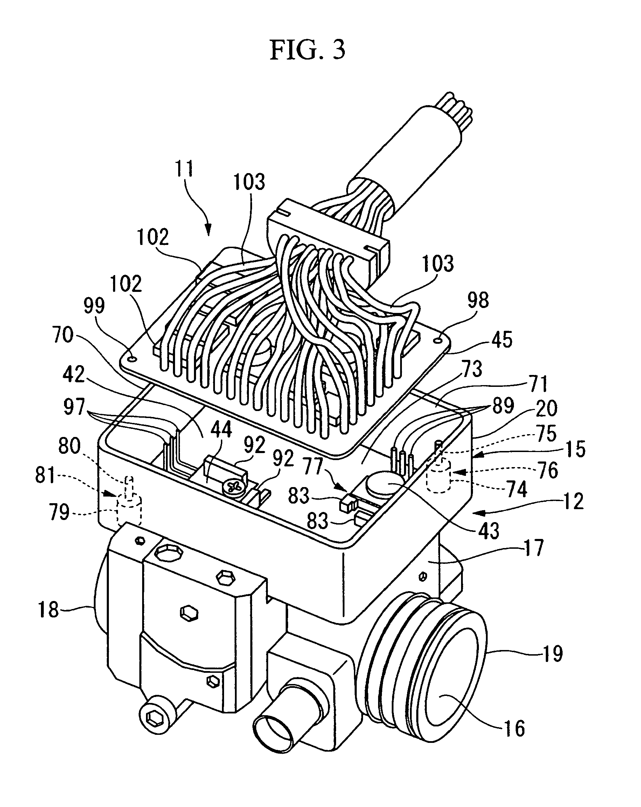

Furthermore, as shown in FIGS. 3 and 4, the throttle body assembly 33 has an intake pressure sensor (i.e., an electrical component) 43 and a power transistor (i.e., an electrical component and a heat generating component) 44. The throttle body assembly 33 and the intake pressure sensor 43 are both mounted on a bottom portion 42 of the housing portion 20.

The intake pressure sensor 43 is connected to a circuit substrate (i.e., an electrical component) 45 that is housed inside the housing portion 20. The intake pressure sensor 43 detects the pressure (i.e., information) inside the intake passage 16 via an aperture portion 46 shown in FIG. 4. The aperture portion 46 opens on the intake manifold 33 side of the throttle valve 24 inside the intake passage 16.

The power transistor 44 is connected to the circuit substrate 45 that is housed in the housing portion 20. The power transistor 44 constitutes an engine control unit 11 (known as an ECU) that electronically controls the engine together with the circuit substrate 45.

Note that once the circuit substrate 45 has been housed therein, the housing portion 20 undergoes a resin potting process in which empty spaces therein are filled with resin 47 (partially shown in FIG. 4). The circuit substrate 45, the intake pressure sensor 43, and the power transistor 44 are also buried in this potting resin 47.

As shown in FIGS. 1 and 2, in the above described throttle body assembly 13, the relief valve 38 is connected via a tube 48 to a fuel tank 49. In addition, the fuel pump mounting portion 21 is connected via a tube 50 to the fuel tank 49. As a result, the fuel pump 35 suctions fuel from the fuel tank 49 via the tube 50 and feeds it via the tube 36 to the injector 34.

The housing portion 20 that is formed above the throttle body 12 has a rectangular bottom portion 42, and a wall portion 70 that stands upright from the four edge portions of the bottom portion 42 so as to form a rectangular frame. The housing portion 20 also has an aperture portion 71 at a top portion thereof. As shown in FIGS. 3 to 5, a mounting base portion 74 on which the circuit substrate 45 is mounted is molded integrally with one of the rectangular corner portions of the bottom portion 42, specifically, the corner portion between the exit side duct portion 19 side and the throttle position sensor 28 side so as to protrude from a bottom surface 73 towards the aperture portion 71. An insertion pin 75 is provided on the mounting base portion 74 protruding towards the aperture portion 71. As a result, a substrate mounting portion 76 is formed that is used to mount the circuit substrate 45. A sensor mounting portion 77 on which the intake pressure sensor 43 is mounted is formed at a position on the bottom surface 73 in the vicinity of the substrate mounting portion 76.

Moreover, as shown in FIGS. 3 to 5, a mounting base portion 79 on which the circuit substrate 45 is mounted is also molded integrally with the rectangular corner portion located diagonally opposite the above described corner portion, specifically, the corner portion between the entrance side duct portion 18 side and the rotating member 25 side so as to protrude from a bottom surface 73 towards the aperture portion 71. An insertion pin 80 is provided on the mounting base portion 79 protruding towards the aperture portion 71. As a result, a substrate mounting portion 81 is formed that is used to mount the circuit substrate 45. A component mounting portion 82 on which the power transistor 44 is mounted is formed at a position on the bottom surface 73 in the vicinity of the substrate mounting portion 81. As a result, the sensor mounting portion 77 and the component mounting portion 82 are formed at diagonally opposite positions of the bottom portion 42.

The sensor mounting portion 77 has a placement portion 84 that is formed on the bottom surface 73 as a result of the circumference thereof being surrounded by wall portions 83, and an insertion passage hole 85 that is opened in the placement portion 84. The insertion passage hole 85 is connected to the aperture portion 46 that opens closer to the intake manifold 33 than the throttle valve 24 of the intake passage 16.

As shown in FIG. 5, the intake pressure sensor 43 has a shaft-shaped insertion portion 87 that is inserted into the insertion passage hole 85 and whose distal end surface forms a detection portion 86, and a sensor main body portion 88 that is positioned relative to the housing portion 20 by being placed inside the placement portion 84 when the insertion portion 87 is inserted into the insertion passage hole 85. A plurality of connecting pins 89 that extend in the opposite direction from the insertion portion 87 are provided on the sensor main body portion 88. Specifically, these connecting pins 89 are provided in three locations. A cylindrical sealing member 91 is installed in a space between outer circumferential portions of the insertion portion 87 and inner circumferential portions of the insertion passage hole 85. This sealing portion 91 is first fitted together with the insertion portion 87 and is then inserted into the insertion passage hole 85 together with the insertion portion 87.

The component mounting portion 82 has a placement portion 93 that is formed on the bottom surface 73 by surrounding its perimeter with wall portions 92, and a screw hole 94 that is opened in the placement portion 93.

The power transistor 44 is positioned relative to the housing portion 20 by being mounted inside the placement portion 93. In this state, as a result of a mounting screw 95 being inserted through the power transistor 44 and screwed into a threaded hole 94, the power transistor 44 is mounted so as to be in direct contact with (namely, is mounted directly on) the bottom portion 42 of the housing portion 20. As shown in FIG. 3, a plurality of connecting pins 97 that, in this mounted state, extend towards the aperture portion 71 are formed on the power transistor 44. Specifically, the connecting pins 97 are formed in three locations.

An electronic component 102 and external connection wires 103 and the like are packaged in advance on the circuit substrate 45. Accordingly, a guide hole 98 into which is inserted the above described insertion pin 75 and a guide hole 99 into which is inserted the insertion pin 80 are formed in diagonally opposite positions on the rectangular circuit substrate 45. As shown in FIG. 5, the same number of connecting holes 100 as there are connecting pins 89 are formed at positions in the circuit substrate 45 adjacent to one guide hole 98. The connecting holes 100 are used for inserting the connecting pins 89 of the intake pressure sensor 43 when it is mounted in the housing portion 20. The same number of connecting holes 101 as there are connecting pins 97 are formed at positions in the circuit substrate 45 adjacent to the other guide hole 99. The connecting holes 101 are used for inserting the connecting pins 97 of the power transistor 44 when it is mounted in the housing portion 20.

When these components are being mounted, the intake pressure sensor 43, with the sealing member 91 already fitted into the insertion portion 87, is mounted on the sensor mounting portion 77 of the bottom portion 42 of the housing portion 20. In addition to this, once the power transistor 44 has been mounted on the component mounting portion 82, the circuit substrate 45 is mounted in the housing portion 20. Namely, while the insertion pins 75 and 80 of the two substrate mounting portions 76 and 81 of the housing portion 20 are being inserted into the two guide holes 98 and 99 that are in diagonally opposite positions on the circuit substrate 45, the connecting pins 89 and 97 of the intake pressure sensor 43 and the power transistor 44 are inserted into the connecting holes 100 and 101 of the circuit substrate 45. As a result, the circuit substrate 45 is mounted on the two mounting bases 74 and 79.

Next, the connecting pins 89 and 97 that protrude from the circuit substrate 45 towards the aperture portion 71 are bonded by soldering or the like to the circuit substrate 45.

A resin potting process is then performed to fill the housing portion 20, in which the circuit substrate 45 has been housed, with resin up to the aperture portion 71. Consequently, the circuit substrate 45, the intake pressure sensor 43, and the power transistor 44 are buried in potting resin. As a result, the circuit substrate 45, that has already been mounted on the two mounting base portions 74 and 79, is mounted on the two substrate mounting portions 76 and 81, and, accordingly, is mounted in the housing portion 20.

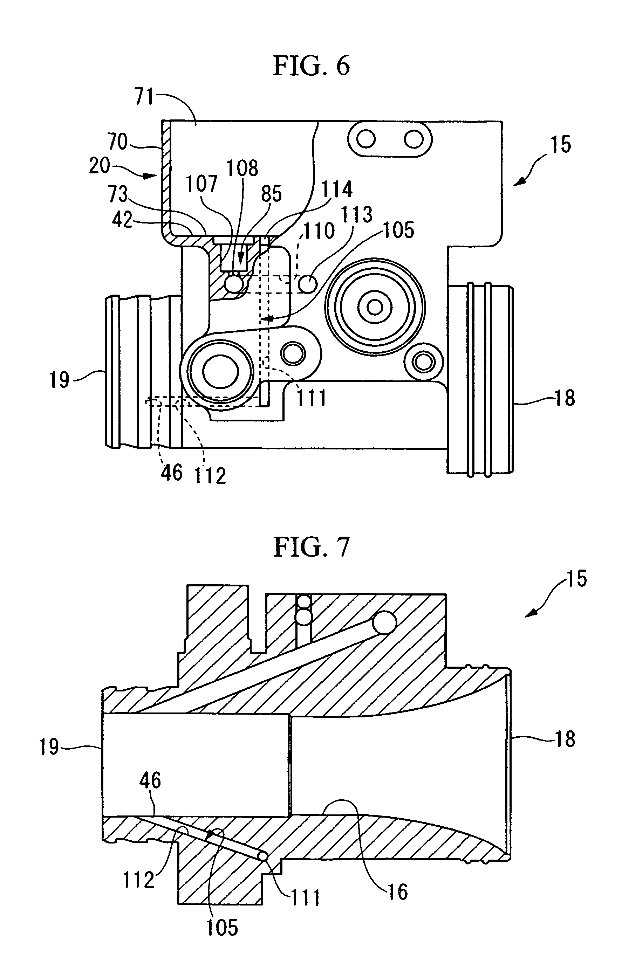

Here, in the present embodiment, a pressure detection passage 105 that includes the insertion passage hole 85 of the sensor mounting portion 77 that is formed in the throttle body main body 15 communicates with the interior of the intake passage 16 in the aperture portion 46. The intake pressure sensor 43 detects the pressure inside the intake passage 16 via the pressure detection passage 105. The formation of this pressure detection passage 105 is described with reference made mainly to FIGS. 4 to 7.

The insertion passage hole 85 is opened perpendicular to the bottom surface 73 of the housing portion 20 in a corner portion of the bottom surface 73 located between the exit side duct portion 19 side and the throttle position sensor 28 side. This insertion passage hole 85 has an engaging hole portion 107 whose cross section orthogonal to the axis is circular. The insertion portion 87 of the intake pressure sensor 43 together with the sealing member 91 that covers the outer circumferential surface thereof engages with this engaging hole portion 107. The insertion passage hole 85 also has a small diameter hole portion 108 that is further hollowed out below the bottom of the engaging hole portion 107 and has a smaller diameter than that of the engaging hole portion 107, and whose cross section orthogonal to the same axis as that of the engaging hole portion 107 is also circular. The engaging hole portion 107 and the small diameter hole portion 108 are formed in the same operation using a step drill.

Next, a first connecting passage hole 110, which is rectilinear and whose cross section orthogonal to the axis is circular, is formed using a drill so as to extend from a side surface portion on the throttle position sensor 28 side of the throttle body main body 15 as far as the small diameter hole portion 108 of the insertion passage hole 85. This first connecting passage hole 110 is drilled so as to extend obliquely from closer to the entrance side duct portion 118 side than the insertion passage hole 85 in the extension direction of the intake passage 16 as far as the small diameter hole portion 108 of the insertion passage hole 85. Moreover, the first connecting passage hole 110 is orthogonal to this insertion passage hole 85.

Next, a second connecting passage hole (i.e., a connecting passage hole) 111, which is rectilinear and whose cross section orthogonal to the axis is circular, is formed using a drill so as to extend from the bottom surface 73 of the housing portion 20 through the first connecting passage hole 110 to a position further beyond it. The second connecting passage hole 111 is located away from the insertion passage hole 85 by a predetermined distance in the extension direction of the first connecting passage hole 110, and extends in parallel with the insertion passage hole 85. Because the second connecting passage hole 111 is parallel with the insertion passage hole 85, it is orthogonal to the first connecting passage hole 110.

Next, a pressure intake connecting hole 112, which is rectilinear and whose cross section orthogonal to the axis is circular, is formed using a drill so as to extend as far as the second connecting passage hole 111 from a position on the inner circumferential surface of the intake passage 16 that is closer to the exit side duct portion 19 side in the direction in which the intake passage 16 extends than is the second connecting passage hole 111. The start position of this pressure inlet passage hole 112 where the hole is drilled in the inner circumferential surface of the intake passage 16 forms the above described aperture portion 46. The pressure inlet passage hole 112 is orthogonal to the second connecting passage hole 111. Furthermore, the pressure inlet passage hole 112 is formed so as to be oblique relative to the extension direction of the intake passage 16. Namely, the pressure inlet passage hole 112 is formed so as to move away in the radial direction of the intake passage 16 from the intake passage 16 as the pressure inlet passage hole 112 approaches the upstream side, namely, approaches the entrance side duct portion 18 side in the extension direction of the intake passage 16. This pressure inlet passage hole 112 is formed in a rectilinear shape from the aperture portion 46.

Thereafter, an aperture portion of the first connecting passage hole 110 that is located in a side surface portion on the throttle position sensor 28 side of the throttle body main body 15 is blocked by a ball plug 113. In addition to this, an aperture portion of the second connecting passage hole 111 that is located in the bottom surface 73 of the housing portion 20 is blocked by a ball plug 114. Accordingly, the pressure detection passage 105 that connects the intake passage 16 to the intake pressure sensor 43 that is mounted in the housing portion 20 is formed by the insertion passage hole 85 of the sensor mounting portion 77, the first connecting passage hole 110, the second connecting passage hole 111, and the pressure inlet passage hole 112.

As a result of the above, the opposite side of the pressure inlet passage hole 112 from the aperture portion 46 side is connected to the second connecting passage hole 111 that extends perpendicularly relative to the pressure inlet passage hole 112. Furthermore, the pressure inlet passage hole 112 is connected to the intake pressure sensor 43 via the second connecting passage hole 111 and the first connecting passage hole 110 that extends perpendicularly relative to the second connecting passage hole 111.

Note that the pressure inlet passage hole 112 has a circular cross section. As a result of the pressure inlet passage hole 112 being formed obliquely relative to the intake passage 16, as is described above, the aperture portion 46 of the pressure inlet passage hole 112 has a substantially elliptical shape that is elongated in the direction in which the intake passage 16 extends.

Here, the second connecting passage hole 111 is formed as far as a position that goes slightly beyond a plane that includes the axis of the rotation shaft 23 and the axis of the intake passage 16. As a result, the aperture portion 46 of the pressure inlet passage hole 112 is provided adjacent to the rotation shaft 23, which is the center of rotation of the throttle valve 24, in the peripheral direction of the throttle valve 24 which is in a closed state.

According to the above described present embodiment, the pressure inlet passage hole 112 is formed extending from the aperture portion 46 in an oblique direction relative to the direction in which the intake passage 16 extends so that the pressure inlet passage hole 112 moves away from the intake passage 16 as it approaches the upstream side in the extension direction of the intake passage 16. Because of this, the pressure inlet passage hole 112 is aligned at an acute angle relative to oil mist and the like that is made to flow by the airflow generated in the intake passage 16, and extends on the opposite side in the return direction thereof. As a result, it is difficult for oil mist and the like to enter into the pressure inlet passage hole 112. Moreover, the depth of the aperture portion 46 side of the pressure inlet passage hole 112 from the intake passage 16 becomes shallower approaching the short side thereof. Accordingly, for this reason as well, it is difficult for oil mist and the like to enter the pressure inlet passage hole 112. Therefore, it is possible to prevent oil mist and the like entering into the pressure inlet passage hole 112, which consequently enables accurate detections to be made consistently by the intake pressure sensor 43.

Moreover, the aperture portion 46 has a substantially elliptical shape that is elongated in the direction in which the intake passage 16 extends. Because of this, even if oil mist or the like does become adhered to the aperture portion 46, it is difficult for the aperture portion 46 to become blocked. Accordingly, it is difficult for the pressure inlet passage hole 112 to become blocked by oil mist and the like, which consequently enables accurate detections to be made consistently by the intake pressure sensor 43. Here, if a hole having a circular cross section and extending in an oblique direction, as is described above, is formed as the pressure inlet passage hole 112, then this alone causes the aperture portion 46 of this pressure inlet passage hole 112 to be formed in a substantially elliptical shape that is elongated in the direction in which the intake passage 16 extends.

Furthermore, the opposite side of the pressure inlet passage hole 112 from the intake passage 16 side is connected to the second connecting passage hole 111 that extends perpendicularly relative to the pressure inlet passage hole 112. Because of this, it is difficult for oil mist and the like to reach the intake pressure sensor 43. Accordingly, it is possible to prevent oil mist and the like from becoming adhered to the intake pressure sensor 43.

In addition, the aperture portion 46 is provided adjacent to the center of rotation side on the circumferential direction of the throttle valve 24 when it is in a closed state. Because of this, it is difficult for the aperture portion 46 to be affected by the flow rate that is generated when the throttle valve 24 is opened. Accordingly, highly accurate pressure detection can be performed by the intake pressure sensor 43.

### INDUSTRIAL APPLICABILITY

The present invention provides a throttle body. In the throttle body of the present invention, a pressure inlet passage hole is formed extending from an aperture portion in an oblique direction relative to the direction in which an intake passage extends so as to move away from the intake passage as it approaches the upstream side of the extension direction of the intake passage. Because of this, the pressure inlet passage hole is aligned at an acute angle relative to oil mist and the like that is made to flow by an airflow generated in the intake passage, and extends on the opposite side in the return direction thereof. As a result, it is difficult for oil mist and the like to enter into the pressure inlet passage hole. Moreover, the depth of the aperture portion side of the pressure inlet passage hole from the intake passage becomes shallower approaching the short side thereof. Accordingly, for this reason as well, it is difficult for oil mist and the like to enter the pressure inlet passage hole. Therefore, it is possible to prevent oil mist and the like entering into the pressure inlet passage hole, which consequently enables accurate detections to be made consistently by an intake pressure sensor.

## Claims

1. A throttle body comprising:
an intake passage (16) on which is provided a throttle valve (24);
a pressure inlet passage hole (112) which has an aperture portion (46) on a downstream side of the throttle valve on the intake passage; and
a sensor mounting portion (77) on which is mounted an intake pressure sensor (43) which detects pressure inside the intake passage (16) via the pressure inlet passage hole (112),
**characterized in that**
the pressure inlet passage hole (112) is formed extending from the aperture portion (46) in an oblique direction relative to the direction in which the intake passage (16) extends so as to move away from the intake passage (16) as it approaches the upstream side of the extension direction of the intake passage (16).

2. The throttle body according to claim 1, wherein the aperture portion (46) has an elliptical shape which is elongated in the direction in which the intake passage extends.

3. The throttle body according to claim 1, wherein an opposite side from the aperture portion side of the pressure inlet passage hole (112) is connected to a connecting passage hole (111) which extends perpendicularly relative to the pressure inlet passage hole (112), and the pressure inlet passage hole (112) is connected to the intake pressure sensor (43) via the connecting passage hole (111).

4. The throttle body according to claim 1, wherein the aperture portion (46) is provided adjacent to a center of rotation side of the throttle valve.

5. The throttle body according to claim 1, further comprises a housing portion (20) that is formed at a top portion of the throttle body, wherein
the sensor mounting portion (77) comprises a placement portion (84) which is formed on a bottom surface of the housing portion (20) as a result of a circumference thereof being surrounded by wall portions, and an insertion passage hole (85) which is opened in the placement portion (84).

## Patentansprüche

1. Drosselkörper enthaltend:
einen Ansaugdurchgang (16), auf dem ein Drosselventil (24) vorgesehen ist;
ein Druckeinlassdurchgangsloch (112), das ein Öffnungsabschnitt (46) auf einer nachgelagerten Seite des Drosselventils an dem Ansaugdurchgang besitzt; und
einen Sensorhalterungsabschnitt (77), auf dem ein Ansaugdrucksensor (43) angebracht ist, der den Druck innerhalb des Ansaugdurchgangs (16) durch das Druckeinlassdurchgangsloch (112) erfasst;
**dadurch gekennzeichnet, dass**
das Druckeinlassdurchgangsloch (112) so gestaltet ist, dass es von dem Öffnungsabschnitt (46) in einer schrägen Richtung relativ zu der Richtung verläuft, in der sich der Ansaugdurchgang (16) erstreckt, um so sich von dem Ansaugdurchgang (16) zu entfernen, wenn es sich der vorgelagerten Seite der Ausdehnungsrichtung des Ansaugdurchgangs (16) nähert.

2. Drosselkörper nach Anspruch 1, wobei der Öffnungsabschnitt (46) eine elliptische Form aufweist, die in der Richtung lang gestreckt ist, in welche sich der Ansaugdurchgang erstreckt.

3. Drosselkörper nach Anspruch 1, wobei eine Gegenseite von der Öffnungsabschnittseite des Druckeinlassdurchgangslochs (112) mit einem Verbindungsdurchgangsloch (111) verbunden ist, das sich im rechten Winkel relativ zu dem Druckeinlassdurchgangsloch (112) erstreckt, und wobei das Druckeinlassdurchgangsloch (112) mit dem Ansaugdrucksensor (43) über das Verbindungsdurchgangsloch (111) verbunden ist.

4. Drosselkörper nach Anspruch 1, wobei der Öffnungsabschnitt (46) benachbart zu einer Drehmittelpunktseite des Drosselventils (24) vorgesehen ist.

5. Drosselkörper nach Anspruch 1, des Weiteren einen Gehäuseabschnitt (20) umfassend, der an einem oberen Abschnitt des Drosselkörpers ausgestaltet ist, wobei
der Sensorhalterungsabschnitt (77) einen Platzierabschnitt (84) enthält, der an der Bodenfläche des Gehäuseabschnitts (20) ausgebildet ist und der auf Grund seiner Ausdehnung von Wandabschnitten umgeben ist, und ein Einschubdurchgangsloch (85), das in dem Platzierabschnitt (84) geöffnet ist.

## Revendications

1. Corps de papillon comprenant :
un passage d'admission (16) sur lequel est agencé un papillon des gaz (24) ;
un trou de passage d'admission sous pression (112) qui a une partie d'ouverture (46) sur un côté aval du papillon des gaz sur le passage d'admission ; et
une partie de montage de capteur (77) sur laquelle est monté un capteur de pression d'admission (43) qui détecte une pression à l'intérieur du passage d'admission (16) via le trou de passage d'admission sous pression (112) ;
**caractérisé en ce que**
le trou de passage d'admission sous pression (112) est formé en s'étendant depuis la partie d'ouverture (46) dans une direction oblique par rapport à la direction dans laquelle le passage d'admission (16) s'étend de manière à s'écarter du passage d'admission (16) lorsqu'il s'approche du côté amont de la direction d'extension du passage d'admission (16).

2. Corps de papillon selon la revendication 1, dans lequel la partie l'ouverture (46) a une forme elliptique qui est allongée dans la direction dans laquelle le passage d'admission s'étend.

3. Corps de papillon selon la revendication 1, dans lequel un côté opposé au côté de la partie d'ouverture du trou de passage d'admission sous pression (112) est relié à un trou de passage de liaison (111) qui s'étend perpendiculairement par rapport au trou de passage d'admission sous pression (112), et le trou de passage d'admission sous pression (112) est relié au capteur de pression d'admission (43) via le trou de passage de liaison (111).

4. Corps de papillon selon la revendication 1, dans lequel la partie d'ouverture (46) est agencée adjacente à un côté de centre de rotation du papillon des gaz.

5. Corps de papillon selon la revendication 1, comprenant en outre une partie de carter (20) qui est formée sur une partie supérieure du corps de papillon, dans lequel
la partie de montage de capteur (77) comprend une partie de placement (84) qui est formée sur une surface inférieure de la partie de carter (20) en ayant pour résultat qu'une circonférence de celle-ci est entourée par des parties de paroi, et un trou de passage d'insertion (85) qui débouche dans la partie de placement (84).
